# EUROPÄISCHE PATENTANMELDUNG

(11) **EP 0 525 548 A1**
(43) Veröffentlichungstag der Anmeldung: **03.02.1993**
(21) Anmeldenummer: 92112247.9
(22) Anmeldetag: 17.07.1992
(51) Int. Cl.: A47J 37/01

(54) **Form zum Herstellen von gebackenen Tortenböden, insbesondere Springform sowie gebackene Tortenböden oder dergleichen**

(30) Priorität: 20.07.1991 DE 9108985 U; 24.12.1991 DE 9116032 U
(71) Anmelder: DAHLI-KUCHEN FRANZ DAHLHOFF KG, D-59590 Geseke (DE)
(72) Erfinder: Dahlhoff, Friedrich, W-4796 Salzkotten-Mantinghausen (DE)
(74) Vertreter: Meldau, Gustav, Dipl.-Ing.

(57) **Zusammenfassung**

In einer Form zum Herstellen von gebackenen Tortenböden, insbesondere Springform ist im Zentrum der Form ein der Höhe des Randes (4 bzw. 23) entsprechender, vorzugsweise kreisrunder Einsatz (6 bzw. 25) angeordnet.

## Beschreibung

Die Erfindung bezieht sich auf eine Form zum Herstellen von gebackenen Tortenböden, insbesondere eine sogenannte Springform, sowie gebackene Tortenböden oder dergleichen.

Gebackene Obstböden - dieser Ausdruck ist hier im weitesten Sinne gemeint - sind aus Mürbeteig, Biskuitteig oder anderen geeigneten Teigen hergestellt, sie können unterschiedliche Durchmesser haben. Die Formen zur Herstellung derartiger Obstböden sind tellerartig ausgebildet, wobei jedoch innerhalb des schräg steil hochgezogenen Randes eine umlaufende tiefe Rille ausgebildet ist, so daß der in einer solchen Form gebackene Obstboden nach dem Stürzen einen umlaufenden hochstehenden Rand aufweist. Dieser Rand dient dazu, den nachträglich aufgelegten Belag in Form von Früchten, wie beispielsweise halbierten Pfirsichen, Plaumen, ganzen entsteinten Kirschen, oder anderen Obststücken oder auch Gemischen davon, aufzunehmen. Diese Obstteile sind zuvor abgetropft und werden nach dem Auflegen im allgemeinen mit Gelatine übergossen und/oder anderen Verzierungen versehen. Die so fertig gestellten Obstböden werden zum Verzehr aufgeschnitten und zwar mittels radialer Schnitte, die sämtlich durch das Zentrum verlaufen. Dabei läßt es sich nicht vermeiden, daß ein Obststück, das im Zentrum angeordnet ist, vielfach zerschnitten werden muß - das gelingt beispielsweise bei einer Kirsche selten oder nie. Auch läßt es sich nicht vermeiden, daß durch das Aufschneiden in der Mitte des gebackenen Bodens wegen der spitz zulaufenden Form der einzelnen geschnittenen Sektoren, der gebackene Teig zerbröckelt und dadurch Schwierigkeiten beim Aufnehmen entstehen.

Formen zum Herstellen von gebackenen Tortenböden bestehen im allgemeinen aus einem kreisförmig begrenzten Blech, das an seinem Außenrand mit einem Bördelfalz versehen sein kann. Ein senkrecht stehender Blechstreifen ist aufrechtstehend um diesen kreisförmig begrenzten Boden herumgezogen und vorzugsweise an seinem unteren Rand mit einer Sicke versehen, in die der gebördelte Rand des Bodens eingreift. Der den Begrenzungsrand bildende Blechstreifen ist an seinen beiden Enden mit Verschlußbeschlägen versehen, so daß dieser Rand nach dem Umlegen um den Boden durch Zusammenziehen und -klemmen der beiden Enden des Streifens unter Spannung fest und sicher an dem Boden festliegt.

In derartigen, einen flachen Zylinder bildenden Formen werden vorzugsweise Bisquitböden gebakken, die nach dem Backvorgang dann durch waagerechte Schnitte in zwei oder mehrere Scheiben zertrennt werden. In die Zwischenräume zwischen diesen Scheiben werden dann Füllungen aus Creme, Konfitüre oder dergleichen eingebracht, sämtliche Scheibem wieder übereinander gelegt und gegebenenfalls dann auch die so entstandenen Torten auf ihren äußeren Oberflächen mit Creme, Glasur oder dergleichen bestrichen. Die so entstandenen Torten werden durch radiale bzw. im Durchmesser verlaufende Schnitte aufgeteilt, so daß die einzelnen abzunehmenden Portionen Sektorenform haben. Dabei ist ständige Erfahrung, daß in der Mitte, in der diese radialen Schnitte in sehr spitzem Winkel zusammenlaufen, unvermeidbar eine Zerstörung des Zusammenhalts der Torte erfolgt, mit dem Ergebnis, daß dort Krümel in großer Menge anfallen können, die auch mit Creme oder anderen Bestandteilen der Füllung der Torte durchmischt sind. Es ist dies ein zumindest optisch unerwünschtes Ergebnis.

Bei solchen Torten hat man zur Vermeidung dieses Ergebnisses schon durch entsprechenden Aufschnitt ein inneres kreisförmig begrenztes bzw. zylinderförmigs Stück ausgeschnitten, das dann als Kernstück eine besondere Portion ergab. Damit wurde vermieden, daß die einzelnen, durch radiale Schnitte hergestellten Sektoren in spitze Winkel ausliefen, die stark krümelten. Die Herstellung eines derartigen zylinderförmigen Ausschnittes in einer Schichttorte zur Vermeidung des Krümelns ist jedoch mit erheblichen Schwierigkeiten verbunden, wenn das mit einem üblichen Haushaltsmesser durchgeführt werden soll. Üblicherweise gelingt ein solcher Ausschnitt mit einem Messer nicht, sondern es sind dafür besondere Vorrichtungen erforderlich, beispielsweise ein zylinderförmiges, stampfformähnliches Messer, das von oben her in die Torte eingedrückt wird, um einen entsprechenden zentralen zylindrischen Ausschnitt zu erzeugen. Dabei besteht jedoch die Gefahr, daß dieser zylindrische Ausschnitt in dem zylinderförmigen Messer haften bleibt und zumindest teilweise aufgrund der Haftfähigkeit der Tortenfüllung mit herausgehoben wird.

Die Erfindung hat sich die Aufgabe gestellt, die vorbeschriebenen Nachteile und Schwierigkeiten zu vermeiden und eine Backform insbesondere eine Springform zu schaffen, mit der Tortenböden zu backen sind, bei denen beim Aufteilen spitzwinklige Schnitte nicht auftreten. Die Aufgabe besteht auch darin, Tortenböden bzw. Torten zu schaffen, bei denen durch spitzwinkliges Aufschneiden die Gefahr des Krümelns und Zerfallens vermieden ist.

Zur Lösung dieser Aufgabe ist eine Backform der gattungsgemäßen Art dadurch gekennzeichnet, daß im Zentrum der Form ein der Höhe des Randes entsprechender vorzugsweise kreisrunder Einsatz angeordnet ist.

Ein gebackener Obstboden ist demnach dadurch gekennzeichnet, daß in seinem Zentrum eine Erhöhung von etwa gleicher Höhe wie der Rand ausgebildet ist.

Durch diese Erhöhung wird verhindert, daß im Zentrum des Obstbodens ein Obststück eingelegt werden kann und damit wird verhindert, daß dieses im Zentrum des Obstbodens liegende Obststück mehrfach oder vielfach beim Aufschneiden in verschiedenen Richtungen zu zerschneiden ist und entsprechende Schwierigkeiten bei diesem Zerschneiden entstehen, bzw., daß dieses Obststück beim vielfachen Zerschneiden unansehnlich wird oder den darunterliegenden gebackenen Teig zerstört. Diese Gefahr besteht besonders dann, wenn das verwendete Messer an seiner Spitze nicht scharf genug ist, oder wenn es sich bei den Obststücken um solche handelt, die eine etwas festere Haut aufweisen, oder die in sich stark faserig sind, wie beispielsweise Ananasstücke.

Durch den Einsatz in der Springform wird erreicht, daß der bzw. die in einer solchen Form gebackenen Tortenböden einen zentralen Leerraum aufwiesen, so daß beim Aufschneiden in sektorenförmige Teile an diesen nicht mehr die zum Krümeln und Zerfallen neigenden spitzen Winkel entstehen, sondern daß diese sektorenförmigen Teile vielmehr an ihrer Schmalstelle stumpf begrenzt sind und zusammenhalten. Darüberhinaus ergibt es sich, daß durch den Einsatz beim Backen an diesen inneren Begrenzungen gewissermaßen eine "Backhaut" entsteht, also eine etwas stärker durchbackene gebräunte Oberfläche, die mechanisch eine höhere Festigkeit aufweist als ein Schnitt, der anschließend in den Tortenboden eingebracht wird. Dadurch wird ein Zerkrümeln oder Zerfallen beim Aufschneiden des Tortenbodens bzw. der Torten vermieden.

Nach einer vorteilhaften Weiterbildung ist die Form im Zentrum der Vertiefung mit einem Zapfen zur Erzeugung eines Loches im Obstboden ausgerüstet. Der darin erzeugte Obstboden weist daher im Zentrum seiner zentralen Erhöhung ein Loch auf.

Durch die Ausbildung dieses Loches im Zentrum der Erhöhung des Obstbodens bzw. im Zentrum des Obstbodens wird vermieden, daß in diesem Bereich der Obstboden durch die größere Anzahl von im Durchmesser verlaufenden Schnitten zu stark aufgeteilt wird und zerkrümelt. Die einzelnen sektorenförmigen Abschnitte weisen nach dem Aufschneiden keine Spitze mehr auf, sondern sind stumpf, wobei diese Abstumpfung noch durch die zentrale Erhöhung und damit größere Masse gegen ein Zerkrümeln besser gesichert ist.

Nach einer vorteilhaften Ausbildung ist die zentrale Ausformung etwa in gleicher Höhe wie der Rand ausgebildet. Dadurch ist sichergestellt, daß die auf den Boden aufzubringende Belegung, die ja vom Rand begrenzt und gehalten wird, im Zentrum nicht angebracht werden kann, so daß dieses freigehalten bleibt.

Um der zentralen Ausformung die erforderliche Festigkeit und Steifigkeit zu geben, ist diese vorteilhaft kegelstumpfförmig ausgebildet. Sie hat vorteilhaft einen Durchmesser von etwa 30 mm am Fuß.

Nach einer zweckmäßigen Ausführungsform ist der Zapfen zur Erzeugung des Loches in dem Obstboden etwa so hoch wie der Rand der Form, so daß er ein vollständig durchgehendes Loch in dem Obstboden erzeugt und damit ein Zerkrümeln beim Aufschneiden mit Sicherheit ausgeschlossen wird. Dieser Zapfen hat zweckmäßig einen Durchmesser von 10 mm. Diese Abmessung hat sich in der Praxis als ausreichend wirksam erwiesen.

Nach einer Weiterbildung der Erfindung ist der zylindrische Einsatz im Zentrum der Springform abnehmbar ausgebildet, so daß er nach dem Entformen des Tortenbodens separat herausgezogen werden kann.

Vorteilhaft ist der vorzugsweise zylindrische Einsatz im Zentrum der Form als Hülse ausgebildet und im Boden der Form ist im Zentrum ein Halterungssitz für den abnehmbaren Einsatz ausgebildet.

Diese Halterung kann als Einwölbung oder als Auswölbung des Formbodens ausgebildet sein, so daß der zylindrische Einsatz zur sicheren Fixierung auf den erhaben ausgebildeten Sitz aufgesteckt oder in den vertieft ausgebildeten Halterungssitz eingesteckt werden kann.

Nach einer weiteren Fortbildung ist der Halterungssitz mit einer umlaufenden Sicke oder Einnehmung bzw. einem umlaufenden Vorsprung versehen, dem eine entsprechende Ausformung oder Einformung an dem Einsatz entspricht, so daß der Einsatz in dem Halterungssitz auch in Achsrichtung fixiert ist durch eine Verklemmung der beiden Ein-oder Ausformung.

Nach einer anderen Ausführungsform ist der Halterungssitz mit einer Halteraste versehen.

Diese Halteraste greift in entsprechende Ausnehmungen des Einsatzes ein um diesen festzuhalten.

Ein Tortenboden nach der Erfindung ist dadurch gekennzeichnet, daß er im Zentrum ein durchgehendes, vorzugsweise zylindrisches Loch aufweist.

Die Erfindung wird nachstehend anhand von Ausführungsbeispielen mit Bezug auf die Zeichnungen näher erläutert. In den Zeichnungen zeigen
Figur 1: Eine Backform zum Herstellen von Obstböden;
Figur 2: Einen Obstboden;
Figur 3: Eine Backform radial geschnitten;
Figur 4: Einen Obstboden radial geschnitten;
Figur 5: Einen Querschnitt durch die Mitte der Backform;
Figur 6: Einen Querschnitt durch die Mitte des darin gebackenen Bodens;
Figur 7: Einen üblichen Ausschnitt aus dem Boden perspektivisch.

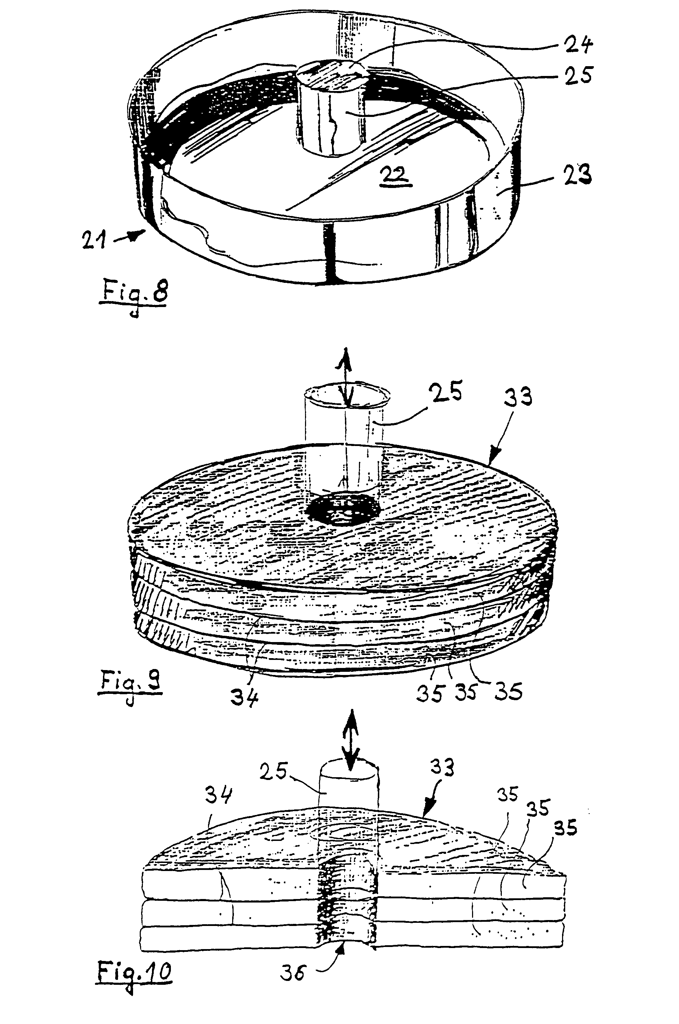

Figur 8: Perspektivische Ansicht einer Backform;
Figur 9: Perspektivische Ansicht eines in dieser Backform hergestellten Tortenbodens;
Figur 10: Einen Tortenboden entsprechend der Figur 9 im radialen Schnitt;
Figur 11: Einen Detailschnitt des Zentrums der Backform;
Figur 12: Einen Detailschnitt entsprechend Figur 11 mit einer anderen Ausführungsform
Figur 13: Einen Detailschnitt entsprechend der Figuren 11 und 12 nach einer weiteren Ausführungsform.

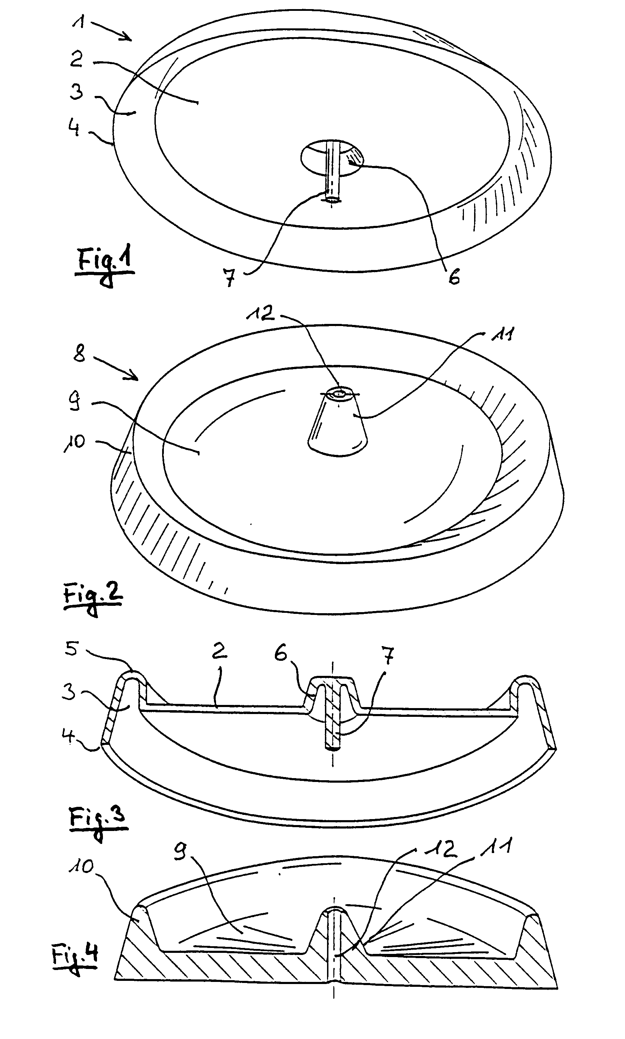

Eine Form 1 zum Herstellen von gebackenen Obstböden o.dergl. ist in Figur 1 dargestellt, sie besteht im allgemeinen aus gezogenem Blech und hat allgemein Tellerform. Ein in einer Ebene liegender Formboden 2 ist umgeben von einer abgesenkten Rinne 3, die wiederum an ihrer Außenseite umgeben ist von einem Rand 4, der den Formboden 2 überragt und zwar etwa um den Betrag der Stärke des zu backenden Obstbodens. Sowohl die innere als auch die äußere Begrenzung der Rinne 5 verlaufen schräg zu dem Grat 5 der Rinne hin.

Im Zentrum des Formbodens 2 ist eine Vertiefung 6 ausgebildet, die etwa die Form eines Kegelstumpfes hat, und in deren Zentrum ist wiederum ein Zapfen 7 angeordnet, dessen Länge bis etwa in die Höhe des Randes der äußeren Begrenzung der Form reicht.

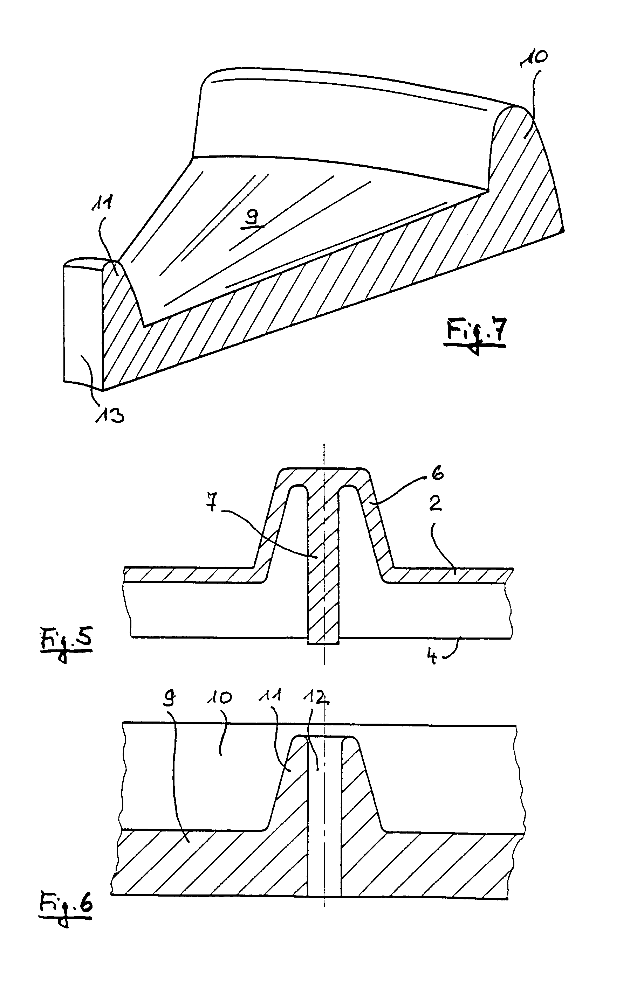

Ein in dieser Form gebackener Obstboden 8, entsprechend den Figuren 2 und 4, besteht aus dem eigentlichen ebenen Boden 9, der an seinem Umfang von einem hochstehenden Rand 10 begrenzt ist. Dieser Rand fällt nach beiden Seiten hin schräg ab. Dieser Rand dient dazu, den auf den Boden 9 aufgebrachten Belag, beispielsweise in Form von Früchten, Fruchtstücken oder dergl. zu erhalten und eine auf diesen Belag flüssig aufgebrachte Obstgelatine oder dergl. oder auch andere Verzierung bis zum Erstarren zu halten.

In der Mitte des ebenen Bodens 9 ist eine kegelförmige Erhöhung 11 ausgebildet von etwa gleicher Höhe wie der Rand 10. Im Zentrum dieser kegelförmigen Erhöhung 11 befindet sich ein durchgehendes Loch 12.

In den Figuren 5 und 6 sind diese Ausbildungen des Zentrums der Backform und des Obstbodens in einem zentralen Schnitt vergrößert dargestellt.

Beim Aufteilen des Obstbodens mittels radialer bzw. im Durchmesser verlaufender Schnitte kreuzen sich sämtliche dieser Schnitte im Zentrum. Ein dementsprechender Abschnitt des Bodens ist in Figur 7 perspektivisch dargestellt. Es ist zu erkennen, daß dieser Sektor des Obstbodens nicht, wie bisher bekannt, spitz zuläuft, sondern im Bereich der bisherigen Spitze eine Erhöhung 11 aufweist als Teil des aufgeschnittenen Kegels 11. Diese Erhöhung ist nach außen hin von einer stumpfen Fläche 13 begrenzt, die einen Abschnitt der Wandung des Loches 12 darstellt.

Insbesondere aus den Figuren 2 und 7 ist zu erkennen, daß ein Belegen des Obstbodens mit Obstteilen oder -stücken im Zentrum unmöglich gemacht ist durch die dort befindliche Erhöhung 6 in Form eines Kegelstumpfes, und dadurch ist verhindert, daß ein im Zentrum des Obstbodens gelegenes Teil des Belages vielfach aufgeschnitten wird oder werden muß, wobei sich erhebliche Schwierigkeiten ergeben und insbesondere auch der Zusammenhalt, der beispielsweise durch eine aufgegossene Gelatine erreicht ist, verloren geht. Auch kleingeschnittene Belagteile, die unmittelbar innerhalb der Erhöhung 11 liegen, werden durch diese gehalten und können beim Aufheben nicht mehr herunterfallen. Die stumpfe Spitze des Abschnittes, entsprechend Figur 7, ist durch die Verstärkung 11 des gebackenen Bodens stabilisiert, und dadurch wird ein Abbrechen oder Ausbrechen vermieden.

Durch die Abplattung 13 bzw. Abstumpfung der Spitze aufgrund des zentralen Loches 12 ist auch vermieden, daß im Bereich der großen Anzahl sich kreuzender Schnitte der gebackene Boden zerkrümelt und ausbricht, so daß aufgrund der Erfindung ein Obstboden aufgeschnitten werden kann, ohne daß es zu Krümeln oder Verlusten auch des Belages kommt.

Die Backform 21 nach der Erfindung besteht aus einem kreisförmig begrenzten Bodenblech 22. Der Rand dieses Bodenbleches kann mit einem Umlegefalz oder dergleichen verstärkt und versteift sein. Um das Bodenblech 22 ist ein aufrecht stehender Blechstreifen 23 als Rand und Begrenzung angeordnet. Dieser Blechstreifen 23 hat mindestens die Höhe des fertiggebackenen Gutes und hält dieses beim Einfüllen und Aufgehen beim Bakken in Form. Der Blechstreifen 23 ist in bekannter Weise an einer Stelle geteilt und dort mit einer bekannten, hier nicht dargestellten Halte- und Klemmvorrichtung versehen. Der Blechstreifen 23 ist vorzugsweise in der Nähe seiner Unterkante mit einer Sicke versehen, die sich beim Umlegen und Festspannen dieses Rand begrenzenden Blechstreifens auf die Außenkante des Bodens 22 formschlüssig aufliegt. Zum Entformen nach dem Backforgang wird die Verschluß- und Klemmvorrichtung des Blechstreifens 23 gelöst, der Blechstreifen abgenommen und dann der dann freiliegende "Tortenboden" weiterbehandelt, also im allgemeinen in einzelne Böden oder Schichten durch waagerechte Schnitte aufgeteilt; diese werden auseinandergelegt, die Füllung aufgebracht und dann stufenweise die einzelnen Böden wieder aufgelegt. Anschließend wird die Torte dann von außen mit Creme, Glasur, Konfitüre oder dergleichen bestrichen, verziert und von dem Boden 22 getrennt. Während dieses ganzen weiteren Fertigungsvorganges verbleibt die entstehende Torte zweckmäßig auf dem Boden 22 zur Stabilisierung.

Im Zentrum des Bodens 22 ist ein kreisrunder Einsatz 25 angeordnet, der aus einer zylindrischen Hülse bestehen kann, die an ihrer Oberseite mit einem fest verbundenen Deckel 24 versehen ist. Diese Hülse 24, 25 besteht aus geformtem Blech.

Die Hülse 25 kann auf den Boden 22 im Zentrum einfach aufgestellt sein, bevor der rohe Teig in die Form eingefüllt ist. Die Hülse 25 kann auch entsprechend den Figuren 11 bis 13 formschlüssig mit dem Boden verbunden sein.

Dazu kann in den Boden 22 eine Einformung 26 angeordnet sein, die einen niedrigen Napf bildet, dessen Innendurchmesser dem Außendurchmesser des Einsatzes 25 entspricht. Der Einsatz 25 ist damit unverrückbar im Zentrum des Bodens 22 und damit der Backform angeordnet.

Nach der Figur 12 ist die Einformung 26 etwas oberhalb ihres Bodens mit einer umlaufenden, nach außen stehenden Sicke 27 versehen, und an dem zylinderförmigen Einsatz 25 ist eine entsprechende Sicke 28 ausgeformt, so daß beim Einsetzen des Einsatzes 25 in die Ausformung 26 eine leicht herstellbare und lösbare formschlüssige Verbindung zwischen dem Einsatz und dem Boden hergestellt ist.

Nach einer weiteren Ausführungsform entsprechend der Figur 13 ist die Ausformung als aus dem Boden 22 hochgedrückte zylindrisch begrenzte Auswölbung 29 ausgebildet. Der Außendurchmesser dieser Auswölbung 29 entspricht dem Innendurchmesser des Einsatzes 25, so daß dieser auf diese Auswölbung 29 aufegesteckt werden kann. Im Inneren der Auswölbung 29 sind zwei Sperrklinken 30 geführt, die von einer dazwischen angeordneten gemeinsamen Druckfeder 31 nach außen gedrückt werden, so daß sie mit ihren äußeren schräg verlaufenden Begrenzungen 32 aus entsprechenden Öffnungen der Ausformung 29 herausragen. Nahe des unteren Randes des Einsatzes 25 sind Fenster ausgeschnitten zur Aufnahme des äußeren Endes der Sperrstücke oder Klinken 30, die beim Aufsetzen des Einsatzes 25 auf die Auswölbung 29 zunächst gegen die Wirkung Ihrer Feder 31 eingedrückt werden, und dann in die ausgeschnittenen Fenster an dem Einsatz 25 halternd einschnappen. Damit ist der Einsatz für das Befüllen der Backform und den Backvorgang fest und sicher in der Backform gehalten.

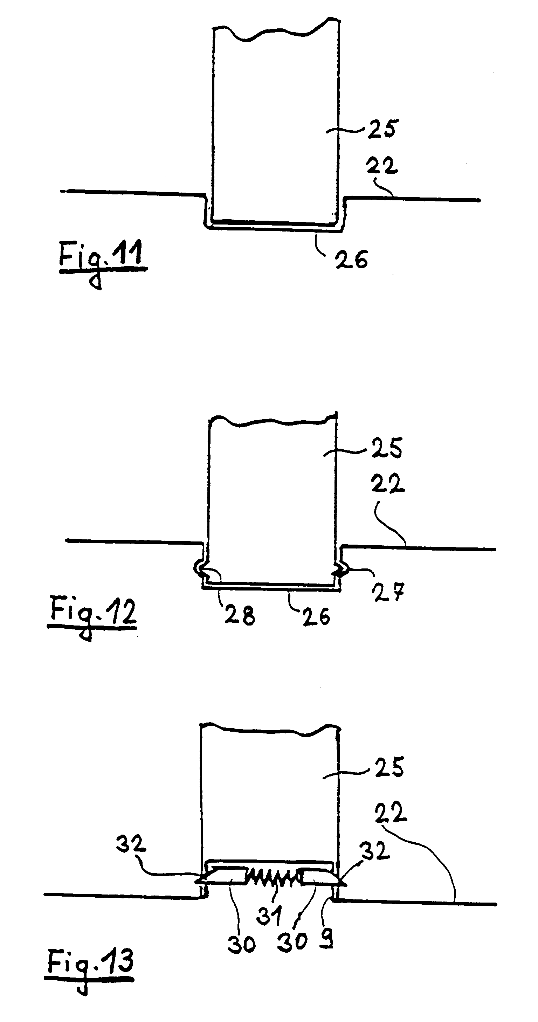

Nach Beendigung des Backvorganges und Abnehmen des Handstreifens 23 wird auch der Einsatz 25 aus dem fertiggestellten Tortenboden nach oben herausgezogen und entfernt, wie das in der Figur 9 angedeutet ist. Der Tortenboden 33 wird dann durch waagerechte Schnitte 34 in die einzelnen Bodenschichten 35 unterteilt.

In der Figur 10 ist dies noch einmal im Schnitt dargestellt und es ist dort besonders deutlich zu erkennen, daß durch den Einsatz 25 während des Backvorganges in dem gebackenen Tortenboden ein mittleres zylindrisches Loch 36 erzeugt ist. Beim Aufschneiden der Torte in einzelne sektorenförmige Portionen durch radiale Schnitte entstehen dann keine spitzen Winkel mehr, sondern diese einzelnen sektorenförmigen Teile des Ausschnittes sind an ihrer schmalsten Stelle stumpf begrenzt, so daß hier ein Zerfallen oder Krümeln verhindert ist. Aufgrund des während des Backvorganges eingesetzten Einsatzes ist die Wandung des Loches 36 beim Backen auch stärker erwärmt, so daß hier eine Kruste oder dergleichen entstanden ist, die die mechanische Festigkeit wesentlich erhöht. Auch dadurch ist ein Zerfallen oder Zerkrümeln beim Aufschneiden der Torte zu vermeiden.

## Patentansprüche

1. Form zum Herstellen von gebackenen Tortenböden insbesondere Springform, dadurch gekennzeichnet, daß im Zentrum der Form ein der Höhe des Randes (4 bzw. 23) entsprechender, vorzugsweise kreisrunder Einsatz (6 bzw. 25) angeordnet ist.

2. Form nach Anspruch 1, dadurch gekennzeichnet, daß im Zentrum des Einsatzes (6 bzw. 25) der Form ein Zapfen (7) zur Erzeugung eines Loches ausgebildet ist.

3. Form nach Anspruch 1, dadurch gekennzeichnet, daß der zenrale Einsatz (6) etwa gleiche Höhe wie der Rand (4) aufweist.

4. Form nach Anspruch 1, dadurch gekennzeichnet, daß der zentrale Einsatz (6) etwa kegelstumpfförmig ausgebildet ist.

5. Form nach Anspruch 1, dadurch gekennzeichnet, daß der zentrale Einsatz (6) einen Durchmesser am Fuß von etwa 30 mm hat.

6. Form nach Anspruch 2, dadurch gekennzeichnet, daß der Zapfen (7) etwa die gleiche Höhe hat, wie der Rand (4) der Form (1).

7. Form nach Anspruch 2, dadurch gekennzeichnet, daß der Zapfen (7) einen Durchmesser von etwa 10 mm hat.

8. Gebackener Obstboden oder dergl., der bei etwa kreisrunder Begrenzung einen erhöhten Rand hat, dadurch gekennzeichnet, daß in seinem Zentrum eine Erhöhung (11) von etwa gleicher Höhe wie der Rand (10) ausgebildet ist.

9. Gebackener Obstboden oder dergl. nach Anspruch 8, dadurch gekennzeichnet, daß im Zentrum der Erhöhung (11) ein Loch (12) ausgebildet ist.

10. Form nach Anspruch 1, dadurch gekennzeichnet, daß der Einsatz (25) im Zentrum der Form abnehmbar ausgebildet ist.

11. Form nach Anspruch 1, dadurch gekennzeichnet, daß der Einsatz (25) im Zentrum der Form als Hülse ausgebildet ist.

12. Form nach Anspruch 10, dadurch gekennzeichnet, daß im Zentrum des Bodens (22) der Form ein Halterungssitz für den abnehmbaren Einsatz (25) ausgebildet ist.

13. Form nach Anspruch 12, dadurch gekennzeichnet, daß der Halterungssitz als den Querschnitt des Einsatzes (25) umfassende Vertiefung (26) im Boden (22) der Form ausgebildet ist.

14. Form nach Anspruch 12 und 13, dadurch gekennzeichnet, daß der Halterungssitz für den abnehmbaren Einsatz (25) mit einer Halteraste (27 oder 32) versehen ist.

15. Tortenboden, insbesondere hergestellt mit einer Backform nach einem der vorstehenden Ansprüche, dadurch gekennzeichnet, daß er im Zentrum ein durchgehendes vorzugsweise zylindrisches Loch 36 aufweist.
